(19) **Europäisches Patentamt**
**European Patent Office**
**Office européen des brevets**

(11) **EP 4 490 707 B1**

(12) **FASCICULE DE BREVET EUROPEEN**

(45) Date de publication et mention
de la délivrance du brevet:
**15.10.2025 Bulletin 2025/42**

(21) Numéro de dépôt: **23708525.3**

(22) Date de dépôt: **07.02.2023**

(51) Classification Internationale des Brevets (IPC):
**G06V 20/58** *(2022.01)*    **G06V 20/56** *(2022.01)*
**B60W 30/00** *(2006.01)*

(52) Classification Coopérative des Brevets (CPC):
**G06V 20/588; B60W 30/00; G06V 20/58;**
G06V 2201/08

(86) Numéro de dépôt international:
**PCT/FR2023/050166**

(87) Numéro de publication internationale:
**WO 2023/170351 (14.09.2023 Gazette 2023/37)**

(54) **PROCÉDÉ ET SYSTÈME POUR GÉRER UNE FONCTIONNALITÉ FOURNIE PAR UN APPAREILLAGE D'AIDE À LA CONDUITE D'UN VÉHICULE AUTOMOBILE**

VERFAHREN UND SYSTEM ZUR VERWALTUNG EINER VON EINER FAHRERASSISTENZVORRICHTUNG EINES KRAFTFAHRZEUGS BEREITGESTELLTEN FUNKTIONALITÄT

METHOD AND SYSTEM FOR MANAGING A FUNCTIONALITY PROVIDED BY A DRIVER ASSISTANCE APPARATUS OF A MOTOR VEHICLE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **10.03.2022 FR 2202105**

(43) Date de publication de la demande:
**15.01.2025 Bulletin 2025/03**

(73) Titulaire: **Stellantis Auto SAS**
**78300 Poissy (FR)**

(72) Inventeurs:
• **ABOULISSANE, Badreddine**
**TAROUDANT, 83350 (MA)**
• **REY, Alexis**
**92210 ST CLOUD (FR)**
• **TOUIL, Lhassane**
**Kenitra, 14000 (MA)**
• **VIVET, Luc**
**75016 PARIS 16 (FR)**

(74) Mandataire: **ESIP**
**Stellantis Auto SAS**
**Service REIP - YT800**
**43, rue Jean Pierre Timbaud**
**78300 Poissy (FR)**

(56) Documents cités:
**US-A1- 2015 298 692**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**EP 4 490 707 B1**

**Description**

**Domaine technique de l'invention**

La présente invention revendique la priorité de la demande française 2202105 déposée le 10.03.2022 dont le contenu (texte, dessins et revendications) est ici incorporé par référence. La présente invention concerne le domaine des procédés et systèmes d'aide à la conduite pour les véhicules automobiles. L'invention porte en particulier sur un procédé de gestion d'une fonctionnalité fournie par un appareillage d'aide à la conduite d'un véhicule automobile circulant sur une chaussée comprenant plusieurs voies de circulation. L'invention concerne par ailleurs un système mettant en œuvre un tel procédé. L'invention s'applique aux véhicules automobiles tels que les véhicules terrestres à moteur, notamment les voitures, les poids-lourds, les véhicules utilitaires, etc.

**État de la technique antérieure**

On sait que bon nombre de véhicules automobiles actuels sont équipés d'appareillages qui fournissent des fonctionnalités d'aide à la conduite, notamment pour gérer de manière autonome le guidage des véhicules dans certaines situations de conduite particulières. Parmi ces appareillages d'aide à la conduite, on trouve par exemple les régulateurs de vitesse adaptatifs ou encore les appareillages qui gèrent la réalisation automatisée de freinages d'urgence ou de manœuvres. Et pour fonctionner de manière sûre et efficace, de tels appareillages d'aide à la conduite doivent pouvoir percevoir l'environnement de conduite proche, càd. qu'ils doivent être en mesure de déterminer des informations contextuelles sur l'environnement de conduite proche et, en particulier, sur d'autres véhicules qui sont présents à proximité. Et parmi ces informations qui sont cruciales à la mise en œuvre de la plupart des fonctionnalités d'aide à la conduite, il est en particulier fondamental qu'un appareillage d'aide à la conduite puisse être en mesure de déterminer aussi précisément que possible si un véhicule à proximité occupe une seule voie de circulation ou, au contraire, s'il occupe partiellement plusieurs voies de circulation de la chaussée. C'est en effet seulement sur la base de telles informations qu'un appareillage d'aide à la conduite peut fournir des fonctionnalités d'aide à la conduite sûres et confortables, par exemple en matière de régulation adaptative de vitesse ou pour la réalisation automatisée de manœuvres.

US 2015/298692 A1 décrit un système d'assistance à la conduite qui utilise plusieurs capteurs pour détecter et suivre les véhicules et piétons devant une voiture. Il analyse leur position et leur mouvement pour évaluer les risques de collision. Si un danger est détecté, le système peut avertir le conducteur et activer le freinage automatiquement pour éviter ou réduire l'impact d'une collision.

**Résumé de l'invention**

Un but de la présente invention est donc de fournir un procédé et un système qui permettent de gérer les fonctionnalités d'un appareillage d'aide à la conduite d'un véhicule automobile en fonction d'informations contextuelles qui concernent l'occupation par d'autres véhicules des voies de circulation d'une chaussée. L'invention vise notamment à fournir un procédé et un système qui permettent à un appareillage d'aide à la conduite d'un véhicule automobile circulant sur une chaussée à plusieurs voies de circulation d'adapter ses fonctionnalités en tenant compte de la manière selon laquelle la largeur et la trajectoire d'au moins un second véhicule circulant à proximité évoluent par rapport aux voies de circulations de la chaussée. Par ce biais, l'invention vise à permettre une perception plus élaborée de l'environnement de conduite afin d'améliorer la sécurité et le confort des appareillages d'aide à la conduite des véhicules automobiles.

Ces buts sont atteints, selon un premier objet de l'invention, au moyen d'un procédé de gestion d'une fonctionnalité fournie par un appareillage d'aide à la conduite d'un premier véhicule automobile circulant sur une chaussée comprenant plusieurs voies de circulation, le procédé comprenant les étapes de :

i) obtenir au moins une modélisation de chaque bord des voies de circulation basée sur une détection d'éléments de marquage au sol effectuée au moyen d'un appareil de détection de l'appareillage d'aide à la conduite ;

ii) provoquer la détection d'un second véhicule circulant à proximité du premier véhicule au moyen de l'appareil de détection;

iii) obtenir les coordonnées de plusieurs points de la trajectoire du second véhicule détecté au cours d'un intervalle de temps précédant l'instant courant ;

iv) déterminer, pour chaque voie de circulation de la chaussée, une valeur de la proportion de la largeur du second véhicule incluse à l'instant courant en fonction d'un premier point d'intérêt à l'extrémité arrière gauche du second véhicule détecté, d'un deuxième point d'intérêt à l'extrémité arrière droite du second véhicule détecté et de la modélisation d'au moins un bord d'au moins une voie de circulation ;

v) adapter la fourniture de la fonctionnalité selon des valeurs d'un paramètre d'affectation du second véhicule à l'instant courant déterminées pour chaque voie de circulation de la chaussée en fonction des valeurs de la proportion de la largeur du second véhicule incluse à l'instant courant et des coordonnées des points de la trajectoire du second véhicule au cours d'un intervalle de temps précédant l'instant courant.

Selon une variante, l'étape i) peut comprendre une étape consistant à obtenir au moins une valeur d'un paramètre de qualité et au moins une valeur d'un paramètre d'existence pour chaque bord des voies de circulation de la chaussée.

Selon une autre variante, une valeur particulière du paramètre de qualité et une valeur particulière du paramètre d'existence peuvent être déterminées en fonction de la position du second véhicule à l'instant courant et les valeurs du paramètre d'affectation du second véhicule à l'instant courant peuvent être déterminées en fonction de la valeur particulière du paramètre d'existence et de la valeur particulière du paramètre de qualité.

Selon une autre variante, une valeur d'un coefficient d'importance peut être déterminée pour chacun des points de la trajectoire du second véhicule au cours d'un intervalle de temps précédant l'instant courant et les valeurs du paramètre d'affectation du second véhicule à l'instant courant peuvent être déterminées en fonction des valeurs du coefficient d'importance.

Selon une autre variante, l'étape iii) peut comprendre une étape consistant à déterminer une voie de circulation de la chaussée sur laquelle se trouve chacun des points de la trajectoire du second véhicule au cours d'un intervalle de temps précédant l'instant courant.

Selon une autre variante, une valeur d'un facteur d'évolution positive ou négative peut être déterminée pour chaque voie de circulation de la chaussée en fonction du premier point d'intérêt et du deuxième point d'intérêt et les valeurs du paramètre d'affectation du second véhicule à l'instant courant peuvent être déterminées en fonction des valeurs du facteur d'évolution.

Selon une autre variante, la valeur du facteur d'évolution pour une voie de circulation peut être positive si le premier point d'intérêt ou le deuxième point d'intérêt s'y trouve et négative sinon.

Selon une autre variante, les valeurs du paramètre d'affectation du second véhicule à l'instant courant peuvent être déterminées en fonction de valeurs du paramètre d'affectation du second véhicule à un instant précédent pour chaque voie de circulation de la chaussée.

En outre, l'invention a également pour objet un système pour gérer une fonctionnalité fournie par un appareillage d'aide à la conduite d'un premier véhicule automobile circulant sur une chaussée comprenant plusieurs voies de circulation, le système comprenant au moins une unité de traitement d'informations, comprenant au moins un processeur, et un support de stockage de données configurés pour mettre en œuvre un procédé tel que décrit ci-dessus.

Enfin, l'invention a aussi pour objet un véhicule automobile comprenant un système tel que décrit ci-dessus.

## Brève description des figures

D'autres caractéristiques et avantages de l'invention apparaîtront à l'examen de la description détaillée ci-après, et des dessins annexés, sur lesquels :

[Fig. 1] illustre schématiquement un système selon l'invention équipant un véhicule automobile selon l'invention ;
[Fig. 2] illustre de façon schématique un organigramme d'un procédé selon l'invention ;
[Fig. 3] illustre de façon schématique la réalisation d'au moins une étape du procédé selon l'invention ;
[Fig. 4] illustre de façon schématique la réalisation d'au moins une étape du procédé selon l'invention ;
[Fig. 5] illustre de façon schématique la réalisation d'au moins une étape du procédé selon l'invention ; et
[Fig. 6] illustre un résultat de la mise en œuvre des étapes d'un procédé selon l'invention.

## Description détaillée de l'invention

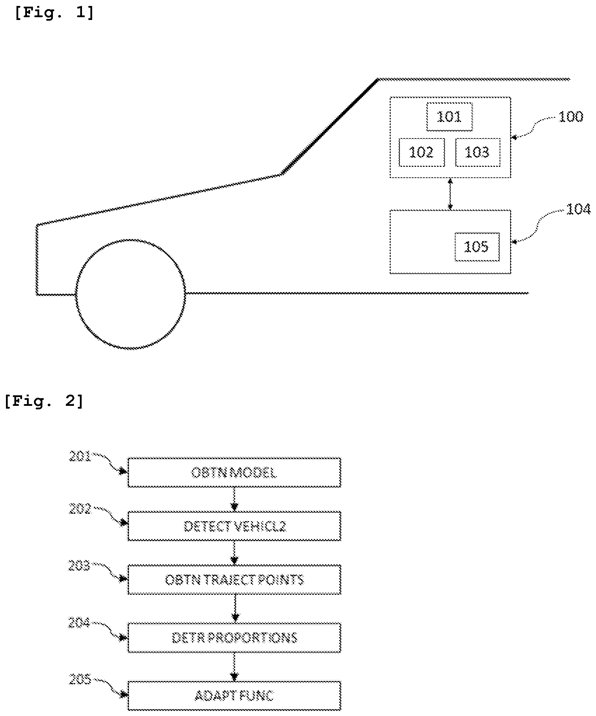

Selon l'invention, un système 100 pour gérer une fonctionnalité fournie par un appareillage d'aide à la conduite 104 est illustré schématiquement sur la figure 1. C'est un système informatique qui comprend au moins une unité de traitement d'informations 101, comprenant un ou plusieurs processeurs, un support de stockage de données 102 et une interface d'entrée et sortie 103 permettant la réception et l'émission de données (et/ou signaux).

Selon un mode de réalisation, le système 100 selon l'invention est embarqué dans un véhicule automobile (e.g. voiture, autobus, poids lourd, etc.) et il est hébergé sur un ou plusieurs des calculateurs, unités de commande électroniques ou autres boitiers télématiques du véhicule. Selon un autre mode de réalisation, celui illustré sur la figure 1, le système 100 selon l'invention est hébergé sur un calculateur d'un véhicule automobile et il interagit par le biais de son interface d'entrée et sortie 103 avec un calculateur d'un appareillage d'aide à la conduite 104 d'un véhicule automobile. Selon un autre mode de réalisation, le système 100 selon l'invention fait partie intégrante d'un calculateur d'un appareillage d'aide à la conduite 104 d'un véhicule automobile. Par conséquent, quel que soit le mode de réalisation, le système 100 selon l'invention est toujours en mesure d'interagir, par le biais de son interface d'entrée et sortie 103, non seulement avec un appareillage d'aide à la conduite d'un véhicule automobile, mais également, via un tel appareillage d'aide à la conduite, avec tout autre dispositif qui, de manière conventionnelle, équipe et/ou interagit avec un appareillage d'aide à la conduite d'un véhicule automobile actuel.

Selon l'invention, un appareillage d'aide à la conduite 104 d'un véhicule automobile comprend au moins un appareil de détection 105 (e.g. lidar, radar, caméra, capteur à ultrasons, centrale inertielle, accéléromètre, etc.), qu'il utilise pour percevoir l'environnement de conduite et notamment pour détecter des éléments de marquage au sol. Sur la base de cette détection des éléments de marquage au sol, un calculateur de l'appareillage d'aide à la conduite 104 détermine une modélisation de chaque bord des voies de circulation, par exemple par interpolation des éléments de marquage au sol détectés. L'appareillage d'aide à la conduite 104 utilise également l'appareil de détection 105 pour localiser des objets statiques ou mobiles, en particulier des véhicules qui circulent à proximité. Ainsi, en interagissant avec ou en faisant partie intégrante d'un tel appareillage d'aide à la conduite, le système 100 selon l'invention est notamment en mesure d'obtenir au moins une modélisation de chaque bord des voies de circulation d'une chaussée et il peut également provoquer la détection d'au moins un second véhicule automobile circulant à proximité.

Par ces moyens, le système 100 selon l'invention détermine à tout instant pour chaque véhicule circulant à proximité des valeurs d'un paramètre d'affectation pour chaque voie de circulation de la chaussée. Il réalise cela notamment en déterminant le positionnement des véhicules proches par rapport aux bords des voies de circulation de la chaussée. Le système 100 selon l'invention adapte enfin la fourniture d'une fonctionnalité fournie par l'appareillage d'aide à la conduite 104, par exemple une fonctionnalité de guidage autonome, une fonctionnalité de réalisation automatisée de freinages d'urgence, une fonctionnalité de réalisation automatisée de manœuvres de changement de voie de circulation, une fonctionnalité de régulation de vitesse, etc.

Selon l'invention, tous les éléments décrits ci-dessus contribuent pour permettre au système 100 selon l'invention de mettre en œuvre un procédé de gestion d'une fonctionnalité fournie par un appareillage d'aide à la conduite d'un premier véhicule automobile circulant sur une chaussée comprenant plusieurs voies de circulation, tel que décrit ci-dessous en lien avec les figures 2 à 6.

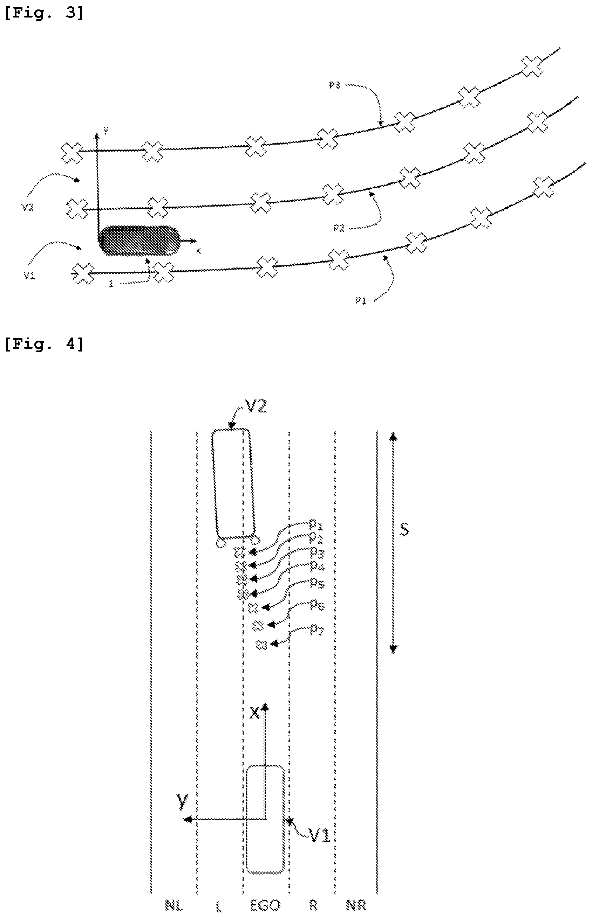

Selon une première étape 201 du procédé selon l'invention, le système 100 obtient une modélisation de chaque bord des voies de circulation de la chaussée basée sur une détection d'éléments de marquage au sol effectuée au moyen de l'appareil de détection 105 de l'appareillage d'aide à la conduite 104. Pour ce faire, le système 100 selon l'invention interagit préférentiellement avec un calculateur de l'appareillage d'aide à la conduite 104 du premier véhicule. Selon un exemple particulier, des éléments de marquage au sol sont détectés, par exemple au moyen d'une caméra de l'appareillage d'aide à la conduite 104. Le calculateur de l'appareillage d'aide à la conduite 104 pilote notamment la caméra pour que celle-ci capture régulièrement des images de la chaussée et il traite les images capturées pour en extraire la localisation d'endroits de la chaussée où se trouvent des éléments de marquage au sol séparant les voies de circulation, comme indiqué par des croix sur la figure 3. Le calculateur de l'appareillage d'aide à la conduite 104 établit alors une modélisation pour chacun des trois bords P1, P2 et P3 des voies de circulation V1, V2 de la chaussée par interpolation des points déterminés, par exemple en utilisant par exemple un polynôme de degré 3. Et ce sont ces modélisations des bords des voies de circulation de la chaussée que le système 100 selon l'invention obtient avantageusement au cours de cette première étape 201 du procédé. Alternativement, c'est le système 100 selon l'invention qui détermine par lui-même les modélisations des bords des voies de circulation à partir de données issues de la détection des éléments de marquage au sol qui sont générées par l'appareil de détection 105.

En outre, pour chaque bord des voies de circulation de la chaussée identifié dans les images capturées, le calculateur de l'appareillage d'aide à la conduite 104 détermine aussi au moins une valeur d'un paramètre de qualité, càd. un paramètre qui renseigne la qualité des éléments de marquage au sol, et au moins une valeur d'un paramètre d'existence, càd. un paramètre qui renseigne la fiabilité de la détection. Préférentiellement, le calculateur de l'appareillage d'aide à la conduite 104 détermine les valeurs de ces paramètres pour une pluralité de segments de la chaussée de longueur préétablie (e.g. 50m). Et les valeurs de ces paramètres sont également obtenues par le système 100 selon l'invention au cours de cette première étape 201 du procédé selon l'invention. En d'autres termes, le système 100 selon l'invention est à ce stade alimenté avec des données qui définissent les bords des voies de circulation de la chaussée et avec des données qui concernent des paramètres additionnels qui sont liés à la détection des éléments de marquage au sol. De cette manière, le système 100 selon l'invention procure l'avantage de pouvoir minimiser l'impact d'éventuelles erreurs qui sont inhérentes à toute détection d'éléments de marquage au sol.

Selon une deuxième étape 202 du procédé selon l'invention, le système 100 selon l'invention provoque la détection d'un second véhicule circulant à proximité du premier véhicule. Pour ce faire, le système 100 selon l'invention interagit préférentiellement avec l'appareillage d'aide à la conduite 104, qui utilise son appareil de détection 105 pour détecter au moins un second véhicule qui circule à proximité (i.e. dans le champ de détection de l'appareil de détection 105). Les données générées par l'appareil de détection 105 varient selon le type d'appareil utilisé. Lorsqu'il s'agit d'un radar ou d'un LIDAR, les données correspondent par exemple à des données de distance entre des points d'un second véhicule détecté et l'appareil de détection 105. Chaque second véhicule détecté est ainsi représenté par un nuage de points (chaque point correspondant à un point d'un second véhicule recevant le rayonnement émis par l'appareil de détection et réfléchissant au moins en partie ce rayonnement), le nuage de points représentant l'enveloppe (ou une partie de l'enveloppe) d'un second véhicule détecté tel que vu par l'appareil de détection 105 et in fine par l'appareillage d'aide à la conduite 104. Lorsqu'il s'agit d'une caméra vidéo, les données correspondent à des données associées à chaque pixel de la ou les images acquises, par exemple des valeurs de niveaux de gris codés sur par exemple 8, 10, 12 ou plus de bits pour chaque canal couleur, par exemple RGB (de l'anglais « Red, Green, Blue » ou en français « Rouge, vert, bleu »).

Le traitement de ces données issues de l'appareil de détection 105 permet à l'appareillage d'aide à la conduite 104 d'obtenir des informations sur les seconds véhicules localisés à proximité (e.g. position, vitesse, accélération, dimensions, etc.). Les informations sur les seconds véhicules détectés sont utilisées par le système 100 selon l'invention pour positionner ces seconds véhicules dans un référentiel. Tel qu'illustré sur la figure 3, le référentiel est un repère cartésien qui établit un plan dans lequel des coordonnées de points bidimensionnels sont exprimées. Le plan est par exemple défini au niveau de la chaussée considérée comme plane. En outre, c'est au cours de cette deuxième étape 202 que le système 100 selon l'invention obtient avantageusement des données caractérisant les types des véhicules détectés (e.g. voiture, moto, poids-lourd). En d'autres termes, lors de cette second étape 202, le système 100 selon l'invention obtient au moins une information qui définit le type du second véhicule.

Selon une troisième étape 203, le système 100 selon l'invention obtient les coordonnées de plusieurs points de la trajectoire du second véhicule au cours d'un intervalle de temps précédant l'instant courant. Ces coordonnées sont préférentiellement obtenues en interagissant avec l'appareillage d'aide à la conduite 104 qui mémorise périodiquement la position du second véhicule. Alternativement, le système 100 selon l'invention pilote l'appareil de détection 105 pour obtenir des données brutes qui sont ensuite traitées pour établir des points de la trajectoire antérieure du second véhicule. En fonction des coordonnées, le système 100 selon l'invention détermine une voie de circulation de la chaussée sur laquelle chacun de ces points se trouve. Ainsi, dans le cas particulier de l'exemple illustré sur la figure 4 dans lequel le second véhicule V2 qui circule devant le premier véhicule V1 sur une chaussée à cinq voies de communication (NL, L, EGO, R, NR) est en train de réaliser une manœuvre pour passer de la voie centrale (EGO) à la voie adjacente à gauche (L), le système selon l'invention obtient les coordonnées de chacun des points $p_1,..., p_7$ et, pour chacun de ces points, il détermine la voie de circulation sur laquelle le point considéré se trouve. Dans le cas de l'exemple illustré, le système 100 selon l'invention détermine donc les couples $(p_1,L)$, $(p_2,L)$, $(p_3,L)$, $(p_4,EGO)$, $(p_5,EGO)$, $(p_6,EGO)$ et $(p_7,EGO)$. Puis, en fonction d'une paramétrisation préétablie, le système 100 selon l'invention détermine une valeur d'un coefficient d'importance $(k_1, ..., k_7)$, préférentiellement comprise entre 0 et 1, pour chacun des points de la trajectoire antérieure du second véhicule. Par exemple, un coefficient d'importance pour un point plus récent de la trajectoire est supérieur à un coefficient d'importance pour un point plus ancien de la trajectoire. Dans le cas de l'exemple illustré, le système 100 selon l'invention détermine donc les triplets $(p_1, L, k_1)$, $(p_2, L, k_2)$, $(p_3, L, k_3)$, $(p_4, EGO, k_4)$, $(p_5, EGO, k_5)$, $(p_6, EGO, k_6)$ et $(P_7, EGO, k_7)$.

En outre, le système 100 selon l'invention s'appuie également sur la détection réalisée au cours de l'étape précédente 202 pour obtenir la distance longitudinale qui sépare le premier et le second véhicule à l'instant courant. En fonction de cette distance qui définit la position du second véhicule à l'instant courant, le système 100 selon l'invention utilise les valeurs des paramètres d'existence et de qualité relatifs aux bords des voies de circulation obtenus au cours de la première étape 201 pour déterminer une valeur particulière du paramètre de qualité, Qual(S), et une valeur particulière du paramètre d'existence, Exist(S), qui concernent les bords des voies de circulation inclus dans le segment S de la chaussée sur lequel se trouve à l'instant courant le second véhicule. De cette manière, le système 100 selon l'invention tient avantageusement compte de la qualité des éléments de marquage au sol et de la fiabilité de la détection précisément à l'endroit de la chaussée qui est occupé à l'instant courant par le second véhicule.

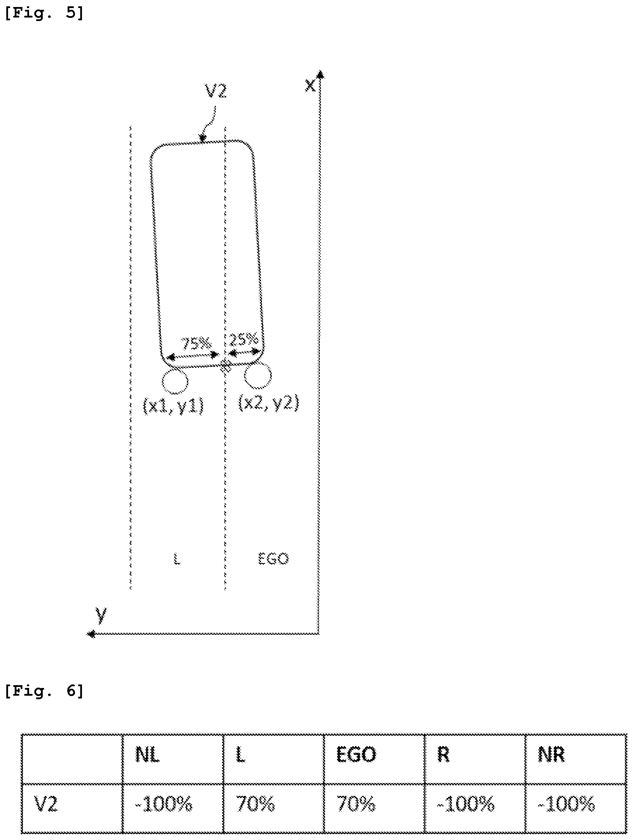

De plus, le système 100 selon l'invention détermine avantageusement les coordonnées de points d'intérêt qui correspondent aux extrémités arrière du second véhicule. Pour ce faire, le système 100 selon l'invention utilise préférentiellement un point de référence du second véhicule détecté au cours de l'étape précédente 202 grâce à l'appareil de détection 105 et il détermine la largeur du second véhicule en utilisant les informations qui définissent le type du second véhicule qui ont été précédemment obtenues, par exemple en associant une valeur de largeur préétablie à un type de véhicule. A partir de la largeur du second véhicule et du point de référence obtenu, le système 100 selon l'invention calcule les coordonnées $(x1, y1)$ d'un premier point d'intérêt qui correspond à l'extrémité arrière gauche du second véhicule et les coordonnées $(x2, y2)$ d'un deuxième point d'intérêt qui correspond à l'extrémité arrière droite, comme cela est illustré sur la figure 5.

Selon une quatrième étape 204 du procédé selon l'invention, le système 100 selon l'invention détermine, pour chaque voie de circulation de la chaussée, une valeur de la proportion de la largeur du second véhicule incluse à l'instant courant. Pour cela, le système 100 selon l'invention utilise les coordonnées des points d'intérêts qui ont été déterminées au cours de l'étape précédente 203 et les modélisations des bords des voies de circulation qui ont été obtenues au cours de la première étape 201. Par exemple, en fonction de la modélisation des bords des voies de circulation obtenues au cours de la première étape 201, le système 100 selon l'invention détermine si les points d'intérêts sont à l'instant courant sur une même voie de circulation ou sur deux voies de circulation différentes. Et, lorsqu'il établit que les points d'intérêts sont sur deux voies de circulation différentes, comme dans l'exemple illustré sur les figures 4 et 5, le système 100 selon l'invention détermine les coordonnées du point d'intersection entre la droite passant par le segment marquant la largeur arrière du second véhicule et le bord de la voie de circulation qui sépare les deux points d'intérêt (la croix sur la figure 5), puis il calcule les proportions de la largeur du second véhicule qui sont incluses dans chacune des voies de circulation en déterminant la distance qui sépare chaque point d'intérêt et le point d'intersection et en déduisant la proportion de la largeur du second véhicule correspondante. Ainsi, dans l'exemple illustré sur les figures 4 et 5, le système 100 selon l'invention détermine que les valeurs des proportions de largeur du second véhicule incluses à l'instant courant par chacune des voies de circulation de la chaussée sont : NL = 0%, L = 75%, EGO = 25%, R = 0% et NR = 0%.

Selon une cinquième étape 205 du procédé selon l'invention, le système 100 selon l'invention adapte la fourniture de la fonctionnalité fournie par l'appareillage d'aide à la conduite 104 selon des valeurs d'un paramètre d'affectation du second véhicule à l'instant courant déterminées pour chaque voie de circulation de la chaussée en fonction des valeurs de la proportion de la largeur du second véhicule incluse à l'instant courant et des coordonnées des points de la trajectoire du second véhicule au cours d'un intervalle de temps précédant l'instant courant.

Pour cela, le système 100 selon l'invention détermine une valeur d'un facteur d'évolution $f_i$ positive ou négative pour chaque voie de circulation de la chaussée en fonction du premier point d'intérêt et du deuxième point d'intérêt. Préférentiellement, la valeur du facteur d'évolution est comprise entre -1 et 1, et cette valeur est positive pour une voie de circulation considérée si le premier point d'intérêt ou le deuxième point d'intérêt s'y trouve à l'instant courant et négative sinon. Ainsi, selon l'exemple illustré sur la figure 5, le système 100 selon l'invention détermine à ce stade une valeur du facteur d'évolution positive pour la voie de circulation EGO (i.e. $f_{EGO} > 0$) et pour la voie de circulation L ($f_L > 0$), et il détermine une valeur du facteur d'évolution négative pour la voie de circulation NL ($f_{NL} < 0$), la voie de circulation R ($f_R < 0$) et la voie de circulation NR ($f_{NR} < 0$). Ensuite, le système 100 selon l'invention détermine une valeur d'un paramètre d'affectation du second véhicule à l'instant courant pour chaque voie de circulation de la chaussée en fonction de la valeur du paramètre d'affectation du second véhicule à un instant précédent pour la voie de circulation considérée, de la valeur du facteur d'évolution pour la voie de circulation considérée, de la valeur de la proportion de la largeur du second véhicule incluse à l'instant courant par la voie de circulation considérée, de la moyenne des valeurs des coefficients d'importance relatifs à chacun des points de la trajectoire antérieure qui se trouve sur la voie de la circulation considérée et des valeurs particulières des paramètres de qualité et d'existence. Ainsi, en référence à l'exemple illustré sur les figures 4 et 5, le système 100 selon l'invention détermine la valeur du paramètre d'affectation du second véhicule à l'instant courant pour la voie de circulation EGO, $P_{EGO}(t)$, en résolvant :

$$P_{EGO}(t) = P_{EGO}(t\text{-}1) + f_{EGO}\,[(k4+k5+k6+k7)/4 + 25\% + \text{Qual}(S) + \text{Exist}(S)]$$

De manière similaire, le système 100 selon l'invention détermine la valeur du paramètre d'affectation du second véhicule à l'instant courant pour la voie de circulation L, $P_L(t)$, en résolvant :

$$P_L(t) = P_L(t\text{-}1) + f_L\,[(k1+k2+k3)/3 + 75\% + \text{Qual}(S) + \text{Exist}(S)]$$

Ainsi, dans une situation de conduite telle que celle illustrée sur les figures 4 et 5, le système 100 selon l'invention détermine par exemple les valeurs du paramètre d'affectation du second véhicule à l'instant courant pour chaque voie de circulation de la chaussée qui correspondent à celles mentionnées dans le tableau illustré sur la figure 6. Et c'est en fonction de ces valeurs que le système 100 selon l'invention adapte finalement la fourniture de la fonctionnalité fournie par l'appareillage d'aide à la conduite 104. Par exemple, le système 100 selon l'invention adapte la fourniture d'une fonctionnalité de freinage d'urgence en pilotant le déclenchement de la réalisation d'un freinage d'urgence lorsque la valeur du paramètre d'affectation du second véhicule à l'instant courant pour la voie de circulation sur laquelle circule le premier véhicule dépasse une valeur seuil préétablie (e.g. 90%). Alternativement, le système 100 selon l'invention adapte la fourniture d'une fonctionnalité de régulation de vitesse adaptative fournie par l'appareillage d'aide à la conduite 104 en considérant le second véhicule en tant que cible seulement lorsque la valeur du paramètre d'affectation pour la voie de circulation sur laquelle circule le premier véhicule est supérieur à une valeur seuil (e.g. 90%). Alternativement, le système 100 selon l'invention adapte la fourniture d'une fonctionnalité de réalisation automatisée de manœuvres de changement de voie de circulation en modifiant l'estimation du positionnement sur la chaussée du second véhicule en fonction des valeurs du paramètre d'affectation.

Ainsi, grâce au procédé et au système selon l'invention décrits ci-dessus, une solution est fournie pour gérer les fonctionnalités d'un appareillage d'aide à la conduite d'un véhicule automobile en fonction d'informations contextuelles qui concernent l'occupation par d'autres véhicules des voies de circulation d'une chaussée, en particulier des informations contextuelles qui tiennent compte du positionnement des véhicules par rapport aux bords des voies de circulation, des trajectoires passées des véhicules détectés et d'autres détails liés à la détection des bords des voies de circulation. Grâce à ces capacités, l'invention permet à un appareillage d'aide à la conduite d'un véhicule automobile de percevoir de manière plus élaborée l'environnement de conduite et ainsi de fournir des fonctionnalités d'aide à la conduite plus sûres et plus confortables.

## Revendications

1. Procédé de gestion, par un système informatique (100), d'une fonctionnalité fournie par un appareillage d'aide à la conduite (104) d'un premier véhicule automobile circulant sur une chaussée comprenant plusieurs voies de circulation,
   **caractérisé en ce que** le procédé comprend les étapes de :

   i) obtenir (201) une modélisation de chaque bord des voies de circulation basée sur une détection d'éléments de marquage au sol effectuée au moyen d'un appareil de détection (105) de l'appareillage d'aide à la conduite (104) ;
   ii) provoquer (202) la détection d'un second véhicule circulant à proximité du premier véhicule au moyen de l'appareil de détection (105) ;
   iii) obtenir (203) les coordonnées de plusieurs points de la trajectoire du second véhicule détecté au cours d'un intervalle de temps précédant l'instant courant ;
   iv) déterminer (204), pour chaque voie de circulation de la chaussée, une valeur de la proportion de la largeur du second véhicule incluse dans la voie de circulation respective à l'instant courant en fonction d'un premier point d'intérêt à l'extrémité arrière gauche du second véhicule détecté, d'un deuxième point d'intérêt à l'extrémité arrière droite du second véhicule détecté et de la modélisation d'au moins un bord d'au moins une voie de circulation ;
   v) adapter (205) la fourniture de la fonctionnalité selon des valeurs d'un paramètre d'affectation du second véhicule à l'instant courant déterminées pour chaque voie de circulation de la chaussée en fonction des valeurs de la proportion de la largeur du second véhicule incluse à l'instant courant et des coordonnées des points de la trajectoire du second véhicule au cours d'un intervalle de temps précédant l'instant courant.

2. Procédé selon la revendication 1, **caractérisé en ce que** l'étape i) comprend une étape consistant à obtenir au moins une valeur d'un paramètre de qualité et au moins une valeur d'un paramètre d'existence pour chaque bord des voies de circulation de la chaussée.

3. Procédé selon la revendication 2, **caractérisé en ce que** une valeur particulière du paramètre de qualité et une valeur particulière du paramètre d'existence sont déterminées en fonction de la position du second véhicule à l'instant courant et les valeurs du paramètre d'affectation du second véhicule à l'instant courant sont déterminées en fonction de la valeur particulière du paramètre d'existence et de la valeur particulière du paramètre de qualité.

4. Procédé selon l'une des revendications précédentes,
   **caractérisé en ce que** une valeur d'un coefficient d'importance est déterminée pour chacun des points de la trajectoire du second véhicule au cours d'un intervalle de temps précédant l'instant courant et les valeurs du paramètre d'affectation du second véhicule à l'instant courant sont déterminées en fonction des valeurs du coefficient d'importance.

5. Procédé selon l'une des revendications précédentes,
   **caractérisé en ce que** l'étape iii) comprend une étape consistant à déterminer une voie de circulation de la chaussée sur laquelle se trouve chacun des points de la trajectoire du second véhicule au cours d'un intervalle de temps précédant l'instant courant.

6. Procédé selon l'une des revendications précédentes,
   **caractérisé en ce que** une valeur d'un facteur d'évolution positive ou négative est déterminée pour chaque voie de circulation de la chaussée en fonction du premier point d'intérêt et du deuxième point d'intérêt et les valeurs du paramètre d'affectation du second véhicule à l'instant courant sont déterminées en fonction des valeurs du facteur d'évolution.

7. Procédé selon la revendication 6, **caractérisé en ce que** la valeur du facteur d'évolution pour une voie de circulation est positive si le premier point d'intérêt ou le deuxième point d'intérêt s'y trouve et négative sinon.

8. Procédé selon l'une des revendications précédentes,
   **caractérisé en ce que** les valeurs du paramètre d'affectation du second véhicule à l'instant courant sont déterminées en fonction de valeurs du paramètre d'affectation du second véhicule pour chaque voie de circulation de la chaussée à un instant précédent.

9. Système (100) pour gérer une fonctionnalité fournie par un appareillage d'aide à la conduite (104) d'un premier véhicule automobile circulant sur une chaussée comprenant plusieurs voies de circulation, **caractérisé en ce que** le système comprend au moins une unité de traitement d'informations (101), comprenant au moins un processeur, et un support de stockage de données (102) configurés pour mettre en œuvre un procédé selon l'une des revendications précédentes.

10. Véhicule automobile, **caractérisé en ce que** il comprend un système (100) selon la revendication 9.


**Patentansprüche**

1. einer Funktionalität, die von einer Fahrassistenzvorrichtung (104) eines ersten Kraftfahrzeugs bereitgestellt wird, das auf einer Straße mit mehreren Fahrspuren fährt , durch ein Computersystem (100), **dadurch gekennzeichnet, dass** das Verfahren die folgenden Schritte umfasst:

   i) Erhalten (201) einer Modellierung jedes Rands der Fahrspuren basierend auf einer Erkennung von Bodenmarkierungselementen, die mittels einer Erkennungsvorrichtung (105) der Fahrassistenzvorrichtung (104) durchgeführt wird;
   ii) Veranlassen (202) der Erkennung eines zweiten Fahrzeugs, das in der Nähe des ersten Fahrzeugs fährt, mittels der Erkennungsvorrichtung (105);
   iii) Erhalten (203) der Koordinaten mehrerer Punkte der Trajektorie des zweiten Fahrzeugs, die während eines Zeitintervalls vor dem aktuellen Zeitpunkt erfasst wurden;
   iv) Bestimmen (204) eines Wertes für den Anteil der Breite des zweiten Fahrzeugs, das sich zum aktuellen Zeitpunkt in der jeweiligen Fahrspur befindet, für jede Fahrspur der Straße als Funktion eines ersten Punkts von Interesse am linken hinteren Ende des erfassten zweiten Fahrzeugs, eines zweiten Punkts von Interesse am rechten hinteren Ende des erfassten zweiten Fahrzeugs und der Modellierung mindestens einer Kante mindestens einer Fahrspur;
   v) Anpassen (205) der Bereitstellung der Funktionalität gemäß Werten eines Zuordnungsparameters des zweiten Fahrzeugs zum aktuellen Zeitpunkt, der für jede Fahrspur der Fahrbahn als Funktion der Werte des zum aktuellen Zeitpunkt enthaltenen Breitenanteils des zweiten Fahrzeugs und der Koordinaten der Punkte der Trajektorie des zweiten Fahrzeugs während eines dem aktuellen Zeitpunkt vorangehenden Zeitintervalls ermittelt wurde.

2. Verfahren nach Anspruch 1, **dadurch gekennzeichnet, dass** Schritt i) einen Schritt umfasst, der darin besteht, für jeden Rand der Fahrspuren der Fahrbahn mindestens einen Wert eines Qualitätsparameters und mindestens einen Wert eines Existenzparameters zu erhalten.

3. Verfahren nach Anspruch 2, **dadurch gekennzeichnet, dass ein** bestimmter Wert des Qualitätsparameters und ein bestimmter Wert des Existenzparameters in Abhängigkeit von der Position des zweiten Fahrzeugs zum aktuellen Zeitpunkt ermittelt werden und die Werte des Zuordnungsparameters des zweiten Fahrzeugs zum aktuellen Zeitpunkt in Abhängigkeit von dem bestimmten Wert des Existenzparameters und dem bestimmten Wert des Qualitätsparameters ermittelt werden.

4. Verfahren nach einem der vorhergehenden Ansprüche, **dadurch gekennzeichnet, dass für jeden der Punkte der Trajektorie des zweiten Fahrzeugs während eines dem aktuellen Zeitpunkt vorangehenden Zeitintervalls ein Wert** eines Wichtigkeitskoeffizienten ermittelt wird und die Werte des Zuordnungsparameters des zweiten Fahrzeugs zum aktuellen Zeitpunkt in Abhängigkeit von den Werten des Wichtigkeitskoeffizienten ermittelt werden.

5. Verfahren nach einem der vorhergehenden Ansprüche, **dadurch gekennzeichnet, dass** Schritt iii) einen Schritt umfasst, der aus der Bestimmung einer Fahrspur der Straße besteht, auf der sich jeder der Punkte der Trajektorie des zweiten Fahrzeugs während eines Zeitintervalls vor dem aktuellen Zeitpunkt befindet.

6. Verfahren nach einem der vorhergehenden Ansprüche, **dadurch gekennzeichnet, dass** für jede Fahrspur der Fahrbahn in Abhängigkeit des ersten und des zweiten interessierenden Punktes **ein** Wert eines positiven oder negativen Evolutionsfaktors ermittelt wird und in Abhängigkeit der Werte des Evolutionsfaktors die Werte des Zuordnungsparameters des zweiten Fahrzeugs zum aktuellen Zeitpunkt ermittelt werden.

7. Verfahren nach Anspruch 6, **dadurch gekennzeichnet, dass** der Wert des Evolutionsfaktors für eine Fahrspur positiv ist, wenn sich dort der erste oder der zweite interessante Punkt befindet, und andernfalls negativ.

8. Verfahren nach einem der vorhergehenden Ansprüche, **dadurch gekennzeichnet, dass** die Werte des Zuordnungsparameters des zweiten Fahrzeugs zum aktuellen Zeitpunkt in Abhängigkeit von Werten des Zuordnungsparameters des zweiten Fahrzeugs für jede Fahrspur der Fahrbahn zu einem vorherigen Zeitpunkt ermittelt werden.

9. System (100) zur Verwaltung einer Funktionalität, die von einer Fahrassistenzvorrichtung (104) eines ersten Kraftfahrzeugs bereitgestellt wird, das auf einer Straße mit mehreren Fahrspuren fährt, **dadurch gekennzeichnet, dass** das System mindestens eine Informationsverarbeitungseinheit (101), die mindestens einen Prozessor umfasst, und ein Datenspeichermedium (102) umfasst, das zur Implementierung eines Verfahrens nach einem der vorhergehenden Ansprüche konfiguriert ist.

10. Kraftfahrzeug, **dadurch gekennzeichnet, dass** es umfasst ein System (100) gemäß Anspruch 9.

## Claims

1. Method for managing, by a computer system (100), a functionality provided by a driving assistance device (104) of a first motor vehicle traveling on a roadway comprising several traffic lanes , **characterized in that** the method comprises the steps of:

> i) obtaining (201) a modeling of each edge of the traffic lanes based on a detection of ground marking elements carried out by means of a detection device (105) of the driving assistance device (104);
> ii) causing (202) the detection of a second vehicle traveling near the first vehicle by means of the detection apparatus (105);
> iii) obtaining (203) the coordinates of several points of the trajectory of the second vehicle detected during a time interval preceding the current instant;
> iv) determining (204), for each traffic lane of the roadway, a value of the proportion of the width of the second vehicle included in the respective traffic lane at the current time as a function of a first point of interest at the left rear end of the detected second vehicle, a second point of interest at the right rear end of the detected second vehicle and the modeling of at least one edge of at least one traffic lane;
> v) adapting (205) the provision of the functionality according to values of an allocation parameter of the second vehicle at the current time determined for each traffic lane of the roadway as a function of the values of the proportion of the width of the second vehicle included at the current time and the coordinates of the points of the trajectory of the second vehicle during a time interval preceding the current time.

2. Method according to claim 1, **characterized in that** step i) comprises a step consisting of obtaining at least one value of a quality parameter and at least one value of an existence parameter for each edge of the traffic lanes of the roadway.

3. Method according to claim 2, **characterized in that** a particular value of the quality parameter and a particular value of the existence parameter are determined as a function of the position of the second vehicle at the current time and the values of the allocation parameter of the second vehicle at the current time are determined as a function of the particular value of the existence parameter and the particular value of the quality parameter.

4. Method according to one of the preceding claims, **characterized in that a** value of an importance coefficient is determined for each of the points of the trajectory of the second vehicle during a time interval preceding the current instant and the values of the allocation parameter of the second vehicle at the current instant are determined as a function of the values of the importance coefficient.

5. Method according to one of the preceding claims, **characterized in that** step iii) comprises a step consisting of determining a traffic lane of the roadway on which each of the points of the trajectory of the second vehicle is located during a time interval preceding the current instant.

6. Method according to one of the preceding claims, **characterized in that a** value of a positive or negative evolution factor is determined for each traffic lane of the roadway as a function of the first point of interest and the second point of interest and the values of the allocation parameter of the second vehicle at the current time are determined as a function of the values of the evolution factor.

7. Method according to claim 6, **characterized in that** the value of the evolution factor for a traffic lane is positive if the first point of interest or the second point of interest is located there and negative otherwise.

8. Method according to one of the preceding claims, **characterized in that** the values of the allocation parameter of the second vehicle at the current time are determined as a function of values of the allocation parameter of the second vehicle for each traffic lane of the roadway at a previous time.

9. System (100) to manage a functionality provided by a driving assistance device (104) of a first motor vehicle traveling on a roadway comprising several traffic lanes, **characterized in that** the system comprises at least one information processing unit (101), comprising at least one processor, and a data storage medium (102) configured to implement a method according to one of the preceding claims.

10. Motor vehicle, **characterized in that** it comprises a system (100) according to claim 9.

[Fig. 1]

[Fig. 2]

[Fig. 3]

[Fig. 4]

[Fig. 5]

[Fig. 6]

|  | NL | L | EGO | R | NR |
|---|---|---|---|---|---|
| V2 | -100% | 70% | 70% | -100% | -100% |

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2202105
- FR 10032022

- US 2015298692 A1